# EUROPÄISCHE PATENTSCHRIFT

(11) **EP 0 351 551 B1**
(45) Veröffentlichungstag und Bekanntmachung des Hinweises auf die Patenterteilung: **05.05.1993**
(21) Anmeldenummer: 89110842.5
(22) Anmeldetag: 15.06.1989
(51) Int. Cl.: B60R 22/36, B60R 22/26

(54) **Sicherheitsgurtanordnung an einem neigungsverstellbaren Kraftfahrzeugsitz**
Safety belt arrangement for a motor vehicle seat with tilt adjustment
Agencement de ceinture de sécurité pour siège à ajustement de l'inclinaison dans des véhicules automobiles

(30) Priorität: 16.07.1988 DE 3824164
(43) Veröffentlichungstag der Anmeldung: 24.01.1990
(73) Patentinhaber: Bayerische Motoren Werke Aktiengesellschaft, 80788 München (DE)
(72) Erfinder: Märtz, Josef, D-8057 Eching (DE); Hochmuth, Karl-Heinz, D-8057 Eching (DE)

(56) Entgegenhaltungen:
- EP-A- 0 315 955
- DE-A- 2 658 747
- DE-U- 8 503 541
- FR-A- 2 271 849
- FR-A- 2 293 224
- US-A- 4 034 931

## Beschreibung

Die Erfindung bezieht sich auf eine Sicherheitsgurtanordnung an einem neigungsverstellbaren Kraftfahrzeugsitz nach dem Oberbegriff des Hauptanspruches.

Gattungsgemäße Sicherheitsgurtanordnungen sind in Kraftfahrzeugsitzen integriert angeordnet, unter anderem mit einer Auslöseeinrichtung, die ein Eingriffselement zum Sperren einer Gurtaufrollvorrichtung beaufschlagt. Bei Neigungsveränderung des Kraftfahrzeugsitzes wird über ein Einstellorgan für die Auslöseeinrichtung die Stellung des Eingriffselementes gegenüber der Gurtaufrollvorrichtung unabhängig von der Neigungsveränderung des Kraftfahrzeugsitzes unverändert aufrechterhalten.

Eine derartige Sicherheitsgurtanordnung ist aus der DE-A-3611004 bekannt. In dieser Druckschrift besitzt die Auslöseeinrichtung einen Rollkörper, dessen Drehachse mit der Schwenkachse der drehbewegbaren Auslöseeinrichtung zusammenfällt.

Eine weitere gattungsgemäße Sicherheitsgurtanordnung ist aus der DE-C-2658747 bekannt. In diesem Fall fällt die Schwenkachse der Auslöseeinrichtung mit der Wickelachse der Gurtaufrollvorrichtung zusammen. Das Einstellorgan ist als ein in Richtung der Erdbeschleunigung wirksames Massenelement ausgebildet, das an der Auslöseeinrichtung befestigt ist.

Die EP-A-315 955 beschreibt einen Stand der Technik nach Artikel 54 (3) und (4) EPÜ. Bei dem hier dargestellten Beschleunigungssensor ist eine Auslöseeinrichtung, die eine Sperrscheibe über ein Eingriffselement beschleunigungsabhängig blockiert, um ihre Kontaktstelle mit dem Eingriffselement schwenkbar.

Aufgabe der Erfindung ist es, eine gattungsgemäße Sicherheitsgurtanordnung so weiterzuentwicklen, daß die Verstellung der Auslöseeinrichtung um ihre Kontaktstelle mit dem Eingriffselement ohne mechanische Verbindung zur Neigungsverstellung des Sitzes möglich ist und gleichzeitig die Gurtaufrollvorrichtung nur in Abhängigkeit von der Fahrzeugverzögerung blockiert wird.

Die Aufgabe wird erfindungsgemäß mit den Merkmalen des Hauptanspruchs gelöst. Vorteilhafte Ausgestaltungen der Erfindung ergeben sich aus den Unteransprüchen.

Eine Ausgestaltung des Erfindungsgegenstandes geht von einer Sicherheitsgurtanordnung aus, deren Einstellorgan ein an der Auslöseeinrichtung befestigtes Massenelement mit einem beschleunigungsabhängig verlagerbaren Trägheitsglied aufweist. Dieses hält die Auslöseeinrichtung bei größerer Fahrzeugverzögerung in ihrer vertikalen Einstellung fest. Eine weitgehend freie Anordnung des Trägheitsgliedes gegenüber dem Stand der Technik nach der DE-C-2658747 wird dadurch erreicht, daß die Auslöseeinrichtung und das Trägheitsglied getrennt voneinander am Sitzrahmen angeordnet sind.

In weiterer Ausgestaltung dieses Ausführungsbeispiels ist das Trägheitsglied zweckmäßigerweise gegen Federkraft verlagerbar.

Eine schwenkbare Anordung des Trägheitgliedes bei einer weiteren Ausführungsform des Erfindungsgegenstandes wird in vorteilhafter Weise dazu genutzt, um mit zunehmender Fahrzeugverzögerung die Auslöseeinrichtung von dem Trägheitsglied umso fester in ihrer vertikalen Einstellung festzuhalten.

Bei einer anderen Ausgestaltung des Erfindungsgegenstandes, die, wie bereits erwähnt, von einem als Massenelement ausgebildeten Einstellorgan ausgeht, ist eine Sperrverzahnung zwischen dem Trägheitsglied und der Auslöseeinrichtung vorgesehen. Damit wird bei entsprechender Fahrzeugverzögerung in vorteilhafter Weise ein Eingriff zwischen diesen beiden Teilen erreicht. Desweiteren ist dadurch die Wirksamkeit des Trägheitsgliedes weitgehend unabhängig von Toleranzen, beispielsweise betreffend den Abstand zwischen dem Trägheitsglied und der Auslöseeinrichtung.

Ein bevorzugtes Ausführungsbeispiel der Erfindung ist in der nachfolgenden Beschreibung und der zugehörigen Zeichnung näher dargestellt.

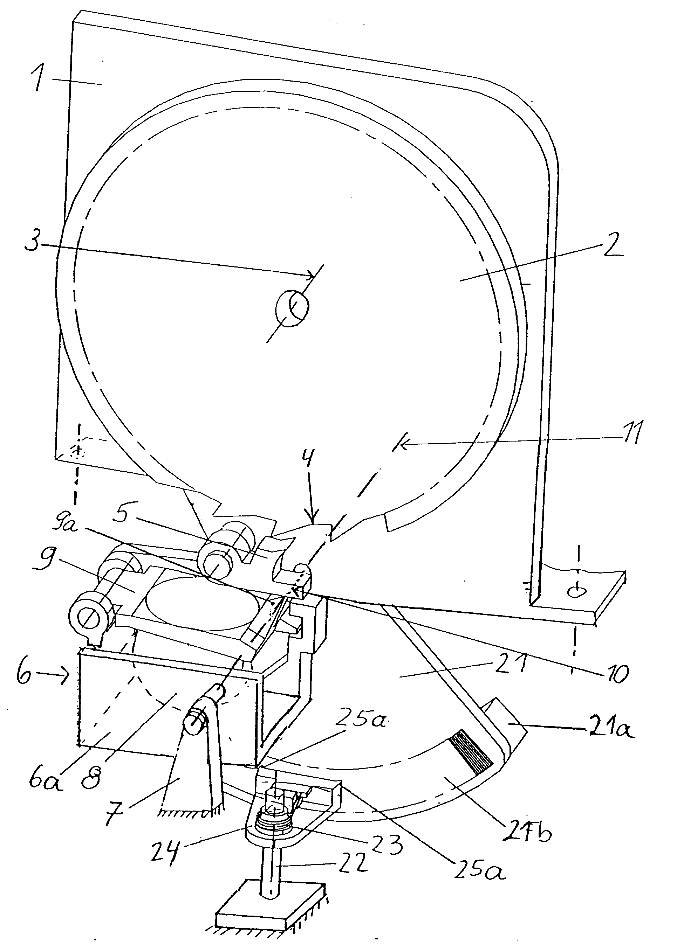

Die einzige Figur zeigt in perspektivischer Ansicht eine Gurtaufrollvorrichtung und eine schwenkbare Auslösevorrichtung mit einem Massenelement, das ein schwenkbares Trägheitsglied über eine Sperrverzahnung fahrzeugbeschleunigungsabhängig festhält.

Das Seitenteil 1 als Teil einer ansonsten nicht weiter gezeigten Gurtaufrollvorrichtung ist mit einem nicht dargestellten Kraftfahrzeugsitz andeutungsweise fest verbunden. Eine Sperrscheibe 2 der Gurtaufrollvorrichtung ist drehbar um eine Wickelachse 3 angeordnet. Am Außenumfang der Sperrscheibe 2 befindet sich, wie abschnittweise dargestellt, eine Verzahnung 4. Ihr ist eine an dem Seitenteil 1 schwenkbar gelagerte Sperrklinke 5 zugeordnet.

Unterhalb der Sperrklinke 5 befindet sich eine Auslöseeinrichtung 6, die mit ihrer Gehäusewand 6a an einem sitzrahmenfesten Lagerbock 7 drehbar gelagert ist. Die Befestigung am Sitzrahmen ist lediglich andeutungsweise wiedergegeben. Eine verlagerbare Kugel 8 innerhalb der Auslöseeinrichtung 6 bewegt eine schwenkbar an der Auslöseeinrichtung 6 angeordnete Schwenkplatte 9 bei entsprechender Fahrzeugverzögerung nach oben. Am freien Ende der Schwenkplatte 9 befindet sich ein Zahnsegment 9a, das auf diese Weise mit seiner linienförmigen, punktiert wiedergegebenen Kontaktstelle 10 mit der Sperrklinke 5 zusammenwirkt und diese nach oben verschwenkt. Dadurch greift die Sperrklinke 5 in die Verzahnung 4 der Sperrscheibe 2 ein, so daß die Gurtaufrollvorrichtung blockiert ist.

Um unabhängig von der Neigung des Kraftfahrzeugsitzes eine gleichbleibende Eingriffsstellung der Sperrklinke 5 mit der Sperrscheibe 2 zu erhalten, befindet sich die linienförmige Kontaktstelle 10 auf der Drehachse 11, um welche die Auslöseeinrichtung schwenkbar gehalten ist.

Die Schwenkbewegung für die Auslöseeinrichtung 6 wird durch die Wirkung der Schwerkraft auf eine Pendelscheibe 21 erreicht. Die Pendelscheibe 21 ist an der Auslöseeinrichtung 6 befestigt und trägt ein Zusatzgewicht 21a. Der gemeinsame Schwerpunkt der Auslöseeinrichtung 6 und der Pendelscheibe 21 mit dem Zusatzgewicht 21a befindet sich unterhalb der Kontaktstelle 10. Bei einer Schwenkbewegung der Auslöseeinrichtung 6 aufgrund einer Neigungsverstellung des Kraftfahrzeugsitzes bleibt diese in ihrer ursprünglich eingestellten Lage. Am Umfang der Pendelscheibe 21 befindet sich eine sich kreisringförmig erstreckende Sperrverzahnung 21b.

Auf einem am Sitzrahmen befestigten Bolzen 22 sitzt eine drehfest angeordnete Spiralfeder 23, deren beide Enden einen Abschnitt einer Schwenkscheibe 24 umschließen. Sie ist auf dem Bolzen 22 drehgelagert. An ihrem freien Ende befinden sich Zähne 25a. Zur besseren Übersicht sind in der Figur lediglich zwei dieser Zähne 25a dargestellt. Die Zähne 25a und 25b sind der Sperrverzahnung 21b zugewandt. Bei Verzögerung des Kraftfahrzeuges dreht sich die Schwenkscheibe 24 gegen die Kraft der Spiralfeder 23, so daß mindestens einer der Zähne 25a mit der Sperrverzahnung 21b in Eingriff kommt. Die Auslöseeinrichtung 6 wird dadurch festgehalten, so daß sie die Sperrklinke 5 ausschließlich in Abhängigkeit der Fahrzeugverzögerung beaufschlagt.

## Patentansprüche

1. Sicherheitsgurtanordnung an einem neigungsverstellbaren Kraftfahrzeugsitz mit einer am Sitzrahmen befestigten Gurtaufrollvorrichtung, einer Auslöseeinrichtung (6), die beschleunigungsabhängig ein um einen sitzrahmenfesten Drehpunkt schwenkbares Eingriffselement (5) zum Sperren der Gurtaufrollvorrichtung beaufschlagt, wobei die Auslöseeinrichtung (6) von einem Einstellorgan bei Neigungsveränderung des Kraftfahrzeugsitzes um ihre Kontaktstelle (10) mit dem Eingriffselement (5) geschwenkt wird und das Einstellorgan aus einem an der Auslöseeinrichtung (6) befestigten Massenelement (21) und einem beschleunigungsabhängig verlagerbaren Trägheitsglied (24) besteht, das die Auslöseeinrichtung (6) in ihrer vertikalen Einstellung festhält, wobei die Auslöseeinrichtung (6) und das Trägheitsglied (24) unabhängig voneinander am Sitzrahmen angeordnet sind.

2. Sicherheitsgurtanordnung nach Anspruch 1, dadurch gekennzeichnet, daß das Trägheitsglied (24) gegen Federkraft (Spiralfeder 23) verlagerbar ist.

3. Sicherheitsgurtanordnung nach Anspruch 1 oder 2, dadurch gekennzeichnet, daß das Trägheitsglied (24) schwenkbar gelagert ist.

4. Sicherheitsgurtanordnung nach einem der Ansprüche 1 bis 3, dadurch gekennzeichnet, daß das Trägheitsglied (24) über eine Sperrverzahnung (21) mit der Auslöseeinrichtung (6) zusammenwirkt.

## Claims

1. A safety belt arrangement on a motor vehicle seat with tilt adjustment, comprising a belt reeling device attached to the seat frame, and a release arrangement (6), which acts upon an engagement element (5) as a function of acceleration, orientable about a point of rotation fixed to the seat frame to lock the belt reeling device, wherein the release arrangement (6) is oriented about its contact point (10) with the engagement element (5) by an adjustment member when the inclination of the motor vehicle seat is altered, and the adjustment member comprises a mass element (21) attached to the release arrangement (6) and an inertia member (24) which is displaceable as a function of acceleration and which secures the release arrangement (6) in its vertical setting, and wherein the release arrangement (6) and the inertia member (24) are arranged independently of each other on the seat frame.

2. A safety belt arrangement according to Claim 1, characterised in that the inertia member (24) is displaceable against spring force (spiral spring 23).

3. A safety belt arrangement according to Claim 1 or 2, characterised in that the inertia member (24) is mounted for swivelling movement.

4. A safety belt arrangement according to any one of Claims 1 to 3, characterised in that the inertia member (24) co-operates via locking teeth (21) with the release arrangement (6).

## Revendications

1. Agencement de ceinture de sécurité sur un siège de véhicule inclinable avec un dispositif d'enroulement de ceinture fixé au bâti du siège, un dispositif de déclenchement (6), qui sollicite en fonction de l'accélération un élément d'engrènement (5) pouvant pivoter autour d'un pivot solidaire du bâti du siège et qui est destiné à bloquer le dispositif d'enroulement de ceinture, agencement dans lequel le dispositif de déclenchement (6) est amené à pivoter par action d'un organe de réglage lors d'une modification d'inclinaison du siège du véhicule, autour de son emplacement de contact (10) avec l'élément d'engrènement (5) et dans lequel l'organe de réglage se compose d'une masse (21) fixée au dispositif de déclenchement (6) et d'un élément d'inertie (24) déplaçable en relation à l'accélération, qui bloque le dispositif de déclenchement (6) dans son réglage vertical, le dispositif de déclenchement (6) et l'élément d'inertie (24) étant fixés au bâti du siège indépendamment l'un de l'autre.

2. Agencement de ceinture de sécurité selon la revendication 1, caractérisé en ce que l'élément d'inertie (24) peut se déplacer contre la force d'un ressort (ressort spirale 23).

3. Agencement de ceinture de sécurité selon la revendication 1 ou la revendication 2, caractérisé en ce que l'élément d'inertie (24) est monté avec pivotement possible.

4. Agencement de ceinture de sécurité selon l'une des revendications 1 à 3, caractérisé en ce que l'élément d'inertie (24) coopère avec le dispositif de déclenchement (6) par l'intermédiaire d'une denture d'arrêt (21).
